# EUROPEAN PATENT APPLICATION

(11) **EP 1 300 209 A2**
(43) Date of publication of application: **09.04.2003**
(21) Application number: 02078753.7
(22) Date of filing: 12.09.2002
(51) Int. Cl.: B22F 7/06, B22F 3/22

(54) **Process of metal injection molding multiple dissimilar materials to form composite parts**

(30) Priority: 03.10.2001 US 970244
(71) Applicant: Delphi Technologies, Inc., Troy, MI 48007 (US)
(72) Inventor: Beard, Bradley D., Muncie, In 47304 (US); Crump, Matthew w., Muncie, 47304 (US); Stuart, Tom L., Pendelton, IN 46064 (US)
(74) Representative: Denton, Michael John

(57) **Abstract**

A method for forming composite parts of two or more dissimilar materials by injection molding. Two or more different metallic- or ceramic-based powder materials (10) are used to form two or more different feedstocks (77,78), which are each melted and injected under heat and pressure into mold cavities (76,86,88,90,120,122,124) and allowed to solidify to form a composite green compact (96,126). In an example of the present invention, two or more powder materials (10) are each mixed with a binder system (20) and granulated to form feedstocks (77,78), the feedstocks (77,78) are melted and concurrently or sequentially injected into a mold (76,80,82,84,100) and allowed to solidify, and the solidified composite green compact (96,126) is then subjected to binder removal and sintering processcs (50,60).

## Description

### Technical Field

This invention relates to composite part manufacturing by injection molding.

### Background of the Invention

Plastic injection molding technology is well known to the plastics industry for producing parts of simple and complex geometry. The plastic injection molding process involves heating a plastic feedstock until it reaches a state of fluidity, transferring the fluid plastic under pressure into a closed hollow space referred to as a mold cavity, and then cooling the plastic in the mold until it again reaches a solid state, conforming in shape to the mold cavity. The metal injection molding (MIM) process combines the structural benefits of metallic materials with the shape complexity of plastic injection molding technology. In the MIM process, a uniform mixture of metallic powder and binders is prepared and injected into a single mold cavity. The binder material provides the proper rheological properties necessary for injection of the metallic material into the mold cavity. Once the part is ejected from the mold, the binder material is removed and the part is then sintered to complete the process. The MIM process is capable of producing single material parts having densities ranging from about 93 to about 99% of theoretical density. Conventional powder metallurgy compaction techniques can form high density single material parts, but compaction techniques are more limited with respect to the intricate geometries required by some parts. For example, while compaction has about a 2 mm tolerance limit, MIM can be used for any geometry having a dimension at least equal to the size of the particles comprising the metallic powder.

While the MIM process has been widely used for formation of single material parts of both simple and complex geometry, fields employing composite materials and parts would benefit from the high density and complex geometry obtainable by the MIM process. Thus, there is a need for the MIM process to be adapted to the production of composite parts comprising multiple dissimilar materials.

### Summary of the Invention

The present invention provides a method for forming composite parts of two or more dissimilar materials by injection molding. To this end, and in accordance with the present invention, two or more different powder materials are injected under heat and pressure into mold cavities and allowed to solidify to form a composite green compact. The powder materials are each metallic-based or ceramic-based, and are different from each other. In an example of the present invention, two or more powder materials are each mixed with a binder system to form feedstocks, the feedstocks are melted and concurrently or sequentially injected into a mold and allowed to solidify, and the solidified composite green compact is then subjected to binder removal and sintering processes.

### Brief Description of the Drawings

The present invention will now be described, by way of example, with reference to the accompanying drawings, in which:
FIG. 1 is a schematic view of the general process steps for manufacturing components by metal injection molding; and
FIGS. 2-4 are schematic views of embodiments of a molding step in a metal injection molding process in accordance with the present invention.

### Description of the Preferred Embodiment

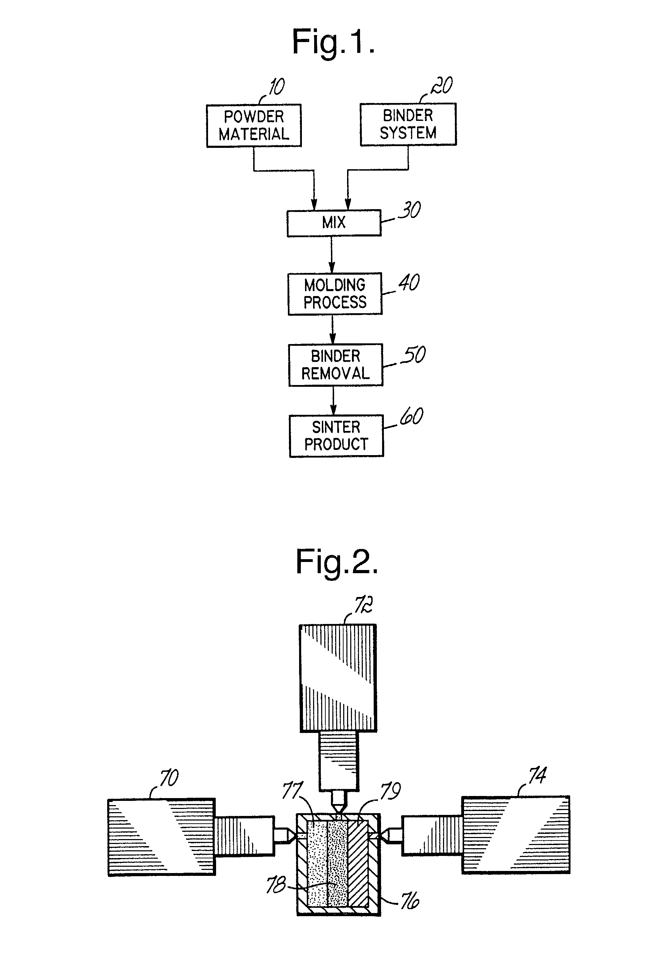

The present invention provides a method for metal injection molding of composite parts formed of multiple dissimilar materials. Metal injection molding (MIM) is generally used to refer to injection molding of metallic-based materials; ceramic injection molding (CIM) is generally used to refer to injection molding of ceramic-based materials; and powder injection molding (PIM) is generally used to refer to injection molding of either metal-based or ceramic-based materials. For purposes of the present application, MIM, PIM, CIM and injection molding are used as synonymous terms for the injection molding of either metallic-based or ceramic-based materials in accordance with the present invention. The general process for injection molding is depicted schematically in FIG. 1. A powder material 10 and a binder system 20 are selected for the particular part to be molded. In step 30, the powder and binder are blended or mixed together and granulated or pelletized to provide the feedstock for the subsequent molding process. The powder material 10 is mixed with the binder system 20 to hold the powder material 10 together prior to injection molding. For the molding process 40, the feedstock is melted and then injected into a mold under moderate pressure (i.e., less than about 10,000 psi) and allowed to solidify to form a green compact. The green compact is then ejected from the mold. The compact is then subjected to a binder removal process 50, also referred to as debinding or delubing. The debinding step 50 typically involves heating the compact to a temperature sufficient to burn off the binder system, leaving a part which is essentially free of binder. Thermal debinding typically uses temperatures in the range of 100°C-850°C. The debinding atmosphere may be, for example, nitrogen or nitrogen-based, argon, hydrogen, dissociated ammonia, or mixtures thereof, and may be exothermic or endothermic. Thermal diffusion debinding may be used in which a reducing atmosphere is provided in vacuum. Thermal permeation debinding may be used in which a reducing atmosphere is provided without a vacuum. Thermal wicking debinding may be used in which the part is packed in a ceramic powder or sand. Thermal oxidation debinding may be used in which debinding is performed in air. Thermal catalytic debinding may be used in which nitric acid is used to depolymerize polyacetals from the binder into formaldehyde, which is burned off at the exhaust of the debinding oven. A first stage solvent debinding may also be used prior to a second stage thermal debinding by one of the above methods. The first stage solvent debinding removes a portion of the binder, usually a wax portion, by exposing the part to temperatures less than about 260°C. Solvent immersion debinding involves placing the part in a solvent bath. Solvent vapor debinding places the part above a solvent and further uses vapors to remove the binder. Solvent supercritical debinding is similar to the vapor method, but a pressure is applied to assist and speed up the debinding process. The second stage thermal debinding then removes the remaining portion, typically the backbone binders.

This binder-free part is then subjected to a sintering process 60, which typically includes heating to a temperature sufficiently high to insure densification and homogenization of the molded material, typically in a reducing atmosphere. Pressure could be introduced at the sintering temperature to aid in the densification of the part.

While metal and ceramic injection molding of a single source material, including the steps depicted in FIG. 1, is known to those skilled in the art of powder metallurgy, the present invention modifies the known process to permit injection molding of parts comprising more than one material. To this end, and in accordance with the present invention, two or more different feedstocks are prepared, each from a powder material 10 and a binder or carrier 20, such that the mixtures will turn to pastes upon heating. Each of the powder materials 10 may be metallic- or ceramic-based, for example, ferrous metals, non-ferrous metals, soft or hard magnetic materials, coated composite powders, bonded or sintered magnets, ceramic materials such as silicon oxides, or plastic irons. The binder or carrier 20 may be, for example, a plastic, wax, water or any other suitable binder system used for metal injection molding. By way of further example, the binder system 20 may include a thermoplastic resin, including acrylic polyethylene, polypropylene, polystyrene, polyvinyl chloride, polyethylene carbonate, polyethylene glycol, and polybutyl methacrylate. Non-restrictive examples of waxes include bees, Japan, montan, synthetic, microcrystalline and paraffin waxes. The binder system may also contain, if necessary, plasticizers, such as dioctyl phthalate, diethyl phthalate, di-n-butyl phthalate and diheptyl phthalate. Generally, a feedstock for metal injection molding will contain a binder system 20 in an amount up to about 70% by volume, with about 30-50% being most common.

As with the general method described above, each powder/binder mixture is formed into pellets, small balls or granules to provide the feedstocks for the subsequent molding process. Each feedstock is heated to a temperature sufficient to allow the mixture=s injection through an injection unit. While although some materials may be injected at temperatures as low as room temperature, the mixtures are typically heated to a temperature between about 85°F (29 °C) to about 385°F (196 °C). The melted feedstocks are then injected into a mold, either sequentially or concurrently. The melting and injection are typically conducted in an inert gas atmosphere, such as argon, nitrogen, hydrogen and helium. The rates of injection are not critical to the invention, and can be determined by one skilled in the art in accordance with the compositions of each feedstock. Different injection units are advantageously used for each feedstock to avoid cross-contamination where such contamination should be avoided.

The mold is designed according to the pattern desired for the composite part. Molds for metal and ceramic injection molding are advantageously comprised of a hard material, such as steel, so as to withstand abrasion from the powder materials. Sliding cores, ejectors, and other moving components can be incorporated in the mold when necessary to form the different material regions of the composite part. Thus, the mold is created to have two or more cavities into which the feedstocks are injected. By way of example only, composite parts can be formed having alternating regions of magnetic conduction and insulation or electrical conduction and insulation, or parts can be formed having a high ductility material in an interior of the part and a high hardness material on outer surfaces where the part is subjected to impact or abrasive wear. Any number of industrial applications of the present invention exist, where composite parts are desired to have multiple dissimilar materials. The present invention is particularly applicable where the part geometries and material boundaries are intricate, such that the tight tolerances achievable in injection molding can enable manufacture of a superior, high density intricate part not otherwise capable of being manufactured from conventional powder metallurgy techniques.

Referring further to the Figures, FIG. 2 depicts one embodiment of the present invention utilizing a single molding machine (not shown) having three injection units 70,72,74 for filling a single mold 76 with three dissimilar materials 77,78,79. Depending on the shape of the part to be molded, the injection units 70,72,74 may be stationary during the injection process, or may be rotated or moved in any desired pattern to inject the three materials 77,78,79 concurrently or sequentially to form the composite part. Although three different materials are described, it should be understood that the present invention and the embodiment of FIG. 2 have application for forming parts made of two or more dissimilar materials, in any composite pattern. Once all of the materials have been injected and have been allowed to solidify, the mold 76 is opened and the part ejected therefrom. The part may then be subjected to known binder removal and sintering processes to form a final high density composite part.

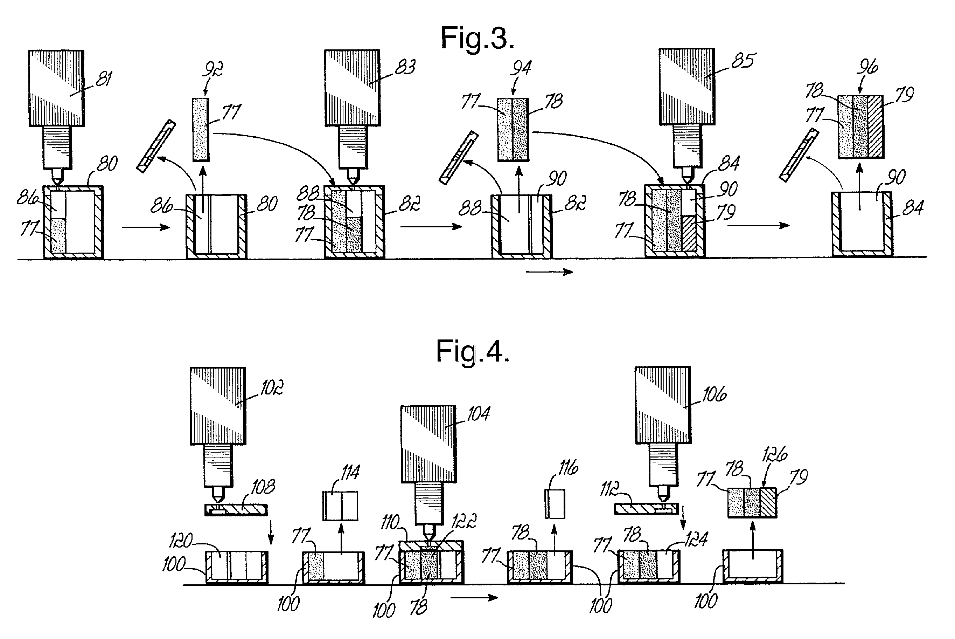

FIG. 3 depicts an alternative embodiment of the present invention. In this embodiment, multiple molds 80,82,84 are used to inject each of the dissimilar materials 77,78,79 independently or sequentially. A first material or melted feedstock 77 is injected into one or more cavities 86 in the first mold 80 by an injection unit 81 to form the proper shape. For purposes of simplicity of depiction, each mold 80,82,84 shown in FIG. 3 has three cavities 86,88,90, each cavity receiving a different material, for forming a three-material composite part. It is to be understood, however, that a first feedstock 77 may be injected into one cavity 86 or multiple distinct cavities, and a second feedstock 78 different than the first feedstock 77 may be injected into one cavity 88 or multiple distinct cavities, and so on, to form a composite part of two or more materials in any desired pattern. After the first material 77 is injected, and allowed to solidify, the partially formed part 92 is then ejected and placed into a second mold 82. A second dissimilar material 78 is injected into another cavity 88 in mold 82, either by a second injection unit 83 from the same single machine (not shown), or by an injection unit 83 of a second machine (not shown). After the second material 78 is allowed to solidify, the partially formed part 94 is removed and placed into a third mold 84 for injection of a third dissimilar material 79 by a third injection unit 85. After the third material 79 is allowed to solidify, the complete molded part 96, or green compact, is ejected from the third mold 84, and the compact 96 is debound and sintered. The embodiment shown and described with reference to FIG. 3 may be used to form composite components having two or more dissimilar materials, in any composite pattern.

FIG. 4 depicts yet another embodiment of the present invention using a progressive or sequential molding process where the part to be formed remains in a single mold. In this process, a bottom or ejector mold half 100 is shuttled from one injection unit 102 to another 104,106 through a series of mating top mold halves 108,110,112 that contain the required runner system to inject the multiple dissimilar materials into the mold cavities 120,122,124 to form the desired composite shape. Removable cores 114,116 may be used in conjunction with the top mold halves. Other runner system and core designs are within the ordinary skill of one in the art, and the invention should in no way be limited to the particular designs depicted herein. More specifically, the bottom mold half 100 is placed under a first injection unit 102 and first top mold half 108 for injection of a first material or melted feedstock 77 into one or more cavities 120 in the bottom mold half 100. Again for simplicity of depiction, the mold 100 shown in FIG. 4 has three cavities 120,122,124 formed by placement of the cores 114,116, each cavity receiving a different material, for forming a three-material composite part. The bottom mold half 100 is then moved to a second top mold half 110 and second injection unit 104, which is either a second injection unit 104 in a single molding machine (not shown), or the injection unit 104 of a different machine (not shown). A second dissimilar material 78 is then injected into one or more cavities 122 in the bottom mold half 100. The bottom mold half 100 is then moved to yet a third top mold half 112 and third injection unit 106 for injection of a third dissimilar material 79 into one or more cavities 124 of the bottom mold half 100. After the materials have all solidified, the complete molded part 126, or green compact, is ejected from the bottom mold half 100, and the compact 126 is debound and sintered. The embodiment shown and described with reference to FIG. 4 may be used to form composite components having two or more dissimilar materials, in any composite pattern.

It should be understood that there is no limit to the number of cavities or geometry of the cavities in a mold for forming a composite part, nor is there a limit to the number of dissimilar materials that may ultimately form the composite part. Sliding cores, removable cores, ejectors, and other moving components can be incorporated in one or more of the molds used in practicing the present invention whenever necessary to form the composite part. Although alternative embodiments for practicing the invention have been described, the invention should in no way be limited to the particular mold designs or methods described. The present invention provides a method for forming composite parts of multiple dissimilar materials by metal injection molding, regardless of the part or mold geometry.

It should be further understood that dissimilar materials behave differently during injection and solidification, such that the dissimilar materials should be selected or manipulated to have similar shrinkage ratios, as well as compatible binder removal and sintering cycles to minimize defects in the final product, where such defects would render the part unacceptable for its purpose. By way of example only, particle size, particle size distribution, particle shape and purity of the powder material can be selected or manipulated to affect such properties or parameters as apparent density, green strength, compressibility, sintering time and sintering temperature. The amount and type of binder mixed with each powder material may also affect various properties of the feedstock, green compact and sintered component, and various process parameters. The method for forming the powder materials, including mechanical, chemical, electrochemical and atomizing processes, also can affect the performance of the powder material during the injection molding process.

Following ejection of the parts from the mold, the molded parts are debound to remove the binder material. Debinding processes are well known to those skilled in the art of powder metallurgy, and are described in detail above. By way of example, one general practice in the industry for thermal debinding includes heating to a temperature in the range of about 100°C to about 850°C, typically about 760EC (1400EF), and holding at that temperature for less than about 6 hours, typically about 2 hours, to burn off the binder material.

The composite part is then subjected to a sintering process, which is also well known to those skilled in art of powder metallurgy. The sintering step typically comprises raising the temperature from the debinding step to a higher temperature in the range of about 1742 °F (950°C) to about 3272 °F (1800°C), typically about 2050EF (1121EC), and holding at that temperature for less than about 6 hours, typically about 2 hours. Sintering achieves densification chiefly by formation of particle-to-particle binding, thereby forming a high-density, coherent mass of two or more materials with clear, well-defined boundaries there between. Densities approaching full theoretical density are possible in the composite parts of the present invention, generally up to about 99% of theoretical.

The debinding and sintering processes may be conducted separately with intermediate cooling in between, or may be separate consecutive steps in a continuous process. It should be understood that the debinding and sintering times and temperatures may be adjusted as necessary, which adjustment is well within the skill of one in the art. For example, different binder systems may warrant differing debinding processes, temperatures, and time cycles, and different powder materials may warrant differing sintering temperature and time cycles. The debinding and sintering operations may be performed in a vacuum furnace, and the furnace may be filled with an argon or other reducing atmosphere. Alternatively, the processes may be performed in a continuous belt furnace, which is generally provided with a hydrogen/nitrogen atmosphere such as 75% H₂ / 25% N₂. Other types of furnaces and furnace atmospheres may be used within the scope of the present invention as determined by one skilled in the art.

While the present invention has been illustrated by the description of embodiments thereof, and while the embodiments have been described in considerable detail, they are not intended to restrict or in any way limit the scope of the appended claims to such detail. Additional advantages and modifications will readily appear to those skilled in the art. The invention in its broader aspects is therefore not limited to the specific details, representative apparatus and methods and illustrative examples shown and described. Accordingly, departures may be made from such details without departing from the scope or spirit of applicant=s general inventive concept.

## Claims

1. A method for injection molding composite components, the method comprising:
injecting a first powder material (10,77) from a first injection unit (70,81,102) under heat and pressure into a first mold cavity (76,86,120), and allowing the first material (10,77) to solidify;
injecting a second powder material (10,78) from a second injection unit (72,83,104) under heat and pressure into a second mold cavity (76,88,122) adjacent the first material (10,77), and allowing the second material (10,78) to solidify, wherein the first and second powder materials (10,77,78) are metallic-based or ceramic-based, and wherein the second powder material (10,78) is different from the first powder material (10,77) to thereby produce a composite injection molded component (96,126).

2. The method of claim 1, wherein the first and second powder materials (10,77,78) are each combined with a binder (20) prior to injecting.

3. The method of claim 2, further comprising the steps of:
ejecting the composite component (96,126) from the mold (76,82,100);
subjecting the composite component (96,126) to debinding to provide a composite part which is essentially free of binder (20); and
sintering the composite part.

4. The method of claim 1, wherein each powder material (10,77,78) is selected from the group consisting of: a ferrous metal, a non-ferrous metal, a soft magnetic material, a hard magnetic material, a magnet, a composite material, a ceramic or a plastic iron.

5. The method of claim 1, wherein the first and second injection units (70,72,102,104) are part of a single injection molding machine, with each unit (70,72,102,104) positioned to inject the respective first and second powder material (10,77,78) into the respective first and second mold cavity (76,120,122) of a single mold (76,100).

6. The method of claim 1, wherein the first and second injection units (102,104) are part of separate injection molding machines, and a single mold (100) having the first and second mold cavities (120,122) is transferred sequentially to each machine for injecting the respective first and second material (10,77,78) into the respective first and second mold cavity (120,122).

7. The method of claim 1, wherein the first mold cavity (86) is in a first mold (80) and the second mold cavity (88) is in a second mold (82), and wherein the first powder material (10,77) is injected into and solidified in the first mold cavity (86), then removed and inserted into the second mold (82), and the second powder material (10,78) is injected into and solidified in the second mold cavity (88).

8. The method of claim 1, further comprising injecting one or more additional powder materials (10,79) into one or more additional mold cavities (90,124), each additional powder material (10,79) having a different composition than the first and second powder materials (10,77,78), to form a composite injection molded component (96,126) of three or more different materials (77,78,79).

9. The method of claim 1, wherein the second powder material (10,78) is injected concurrently with the first powder material (10,77).

10. The method of claim 1, wherein the second powder material (10,78) is injected after the first powder material (10,77) is allowed to solidify.

11. A method for injection molding composite components, comprising the steps of:
preparing at least two different feedstocks (77,78), each feedstock (77,78) comprising a mixture of a powder material (10) and a binder (20), the powder materials (10) being metallic-based or ceramic-based;
feeding each feedstock (77,78) to a respective injection unit (70,72,81,83,102,104);
melting the feedstocks (77,78); and
molding the feedstocks (77,78) into a composite compact (96,126) of desired shape comprising at least two different materials (10) by injecting melted feedstock (77,78) from each injection unit (70,72,81,83,102,104) under heat and pressure into a respective portion of a mold (76,80,82,100), and allowing the feedstocks (77,78) to solidify.

12. The method of claim 11, further comprising the steps of:
ejecting the compact (96,126) from the mold (76,82,100);
subjecting the compact (96,126) to debinding to provide a part which is essentially free of binder (20); and
sintering the part.

13. The method of claim 11, wherein each feedstock (77,78) is prepared with a powder material (10) selected from the group consisting of: a ferrous metal, a nonferrous metal, a soft magnetic material, a hard magnetic material, a magnet, a composite material, a ceramic and a plastic iron.

14. The method of claim 11, wherein each feedstock (77,78) is injected into the respective portion of a single mold (76,100) to form the composite compact (126).

15. The method of claim 14, wherein the injection units (70,72,102,104) form a single injection molding machine, with each unit positioned to inject feedstock (77,78) into the respective portion of the single mold (76,100).

16. The method of claim 15, wherein all feedstocks (77,78) are injected concurrently.

17. The method of claim 15, wherein the feedstocks (77,78) are injected sequentially.

18. The method of claim 14, wherein each injection unit (102,104) is part of a separate injection molding machine, and the single mold (100) is transferred sequentially to each machine for injecting the respective feedstock (77,78) into the respective portion of the single mold (100).

19. The method of claim 11, comprising repeating the steps of injecting one melted feedstock (77) into the respective portion of the mold (80) and allowing the feedstock (77) to solidify, followed by transferring the solidified feedstock (92) to another mold (82), until each feedstock (77,78) has been injected, to thereby form the composite compact (96).

20. A method for forming composite components, the method comprising:
preparing at least two different feedstocks (77,78), each feedstock (77,78) comprising a mixture of a powder material (10) and a binder (20), the powder materials (10) being metallic-based or ceramic-based;
feeding each feedstock (77,78) to a respective injection unit (70,72,81,83,102,104);
melting the feedstocks (77,78);
molding the feedstocks (77,78) into a composite compact (96,126) of desired shape comprising at least two different materials (10) by injecting melted feedstock (77,78) from each injection unit (70,72,81,83,102,104) under heat and pressure into a respective portion of a mold (76,80,82,100), and allowing the feedstocks (77,78) to solidify;
ejecting the compact (96,126) from the mold (76,82,100);
subjecting the compact (96,126) to debinding to provide a part which is essentially free of binder (20); and
sintering the part.

21. The method of claim 20, wherein each feedstock (77,78) is prepared with a powder material (10) selected from the group consisting of: a ferrous metal, a nonferrous metal, a soft magnetic material, a hard magnetic material, a magnet, a composite material, a ceramic and a plastic iron.

22. The method of claim 20, wherein each feedstock (77,78) is injected into the respective portion of a single mold (76,100) to form the composite compact (126).

23. The method of claim 22, wherein the injection units (70,72,102,104) form a single injection molding machine, with each unit positioned to inject feedstock (77,78) into the respective portion of the single mold (76,100).

24. The method of claim 23, wherein all feedstocks (77,78) are injected concurrently.

25. The method of claim 23, wherein the feedstocks (77,78) are injected sequentially.

26. The method of claim 22, wherein each injection unit (102,104) is part of a separate injection molding machine, and the single mold (100) is transferred sequentially to each machine for injecting the respective feedstock (77,78) into the respective portion of the single mold (100).

27. The method of claim 20, comprising repeating the steps of injecting one melted feedstock (77) into the respective portion of the mold (80) and allowing the feedstock (77) to solidify, followed by transferring the solidified feedstock (92) to another mold (82), until each feedstock (77,78) has been injected, to thereby form the composite compact (96).

28. The method of claim 20, wherein the debinding includes heating the compact (96,126) to a temperature sufficient to burn off essentially all of the binder (20).

29. The method of claim 28, wherein the debinding temperature is in the range of about 100 °C to about 850 °C.

30. The method of claim 20, wherein the sintering includes heating the part to a temperature sufficient to densify the materials (10).

31. The method of claim 28, wherein the sintering temperature is in the range of about 950 °C to about 1800 °C.
